# EUROPÄISCHE PATENTANMELDUNG

(11) **EP 0 799 684 A1**
(43) Veröffentlichungstag der Anmeldung: **08.10.1997**
(21) Anmeldenummer: 96810211.1
(22) Anmeldetag: 03.04.1996
(51) Int. Cl.: B29C 47/54, B30B 11/26

(54) **Rohlingsautomat mit zwei oder mehreren schwenkbaren Extrudier-Zylindern**

(71) Anmelder: ZW HYDRAULIK AG, 4444 Rümlingen (CH)
(72) Erfinder: Kaufmann, Willy, 4447 Känerkinden (CH); Burghoffer, Jean-Louis, 68510 Stetten (FR); Kortemeyer, Dieter, 4452 Itingen (CH)

(57) **Zusammenfassung**

Der Rohlingsautomat mit zwei oder mehreren um die Achse (3) schwenkbaren Extrudierzylindern z.B. (1a + 1b) erfüllt die gestellte Aufgabe, eine maximale Gewichtsausbringung bei minimaler Stillstandszeit, optimal. Die Forderung nach einer geringen Zeitaufwendung bei der Reinigung wird voll erfüllt. Dieses wird auch dadurch unterstützt, dass das Vakuumsystem ventillos ausgeführt ist.

## Beschreibung

Die Erfindung bezieht sich auf Rohlingsautomaten zur Herstellung von Halbfabrikaten aus plastifizierfähigen Material mit zwei oder mehreren schwenkbar angeordneten Extrudierzylindern gemäss der Gestaltung des Patentanspruches 1.

Die auf dem Markt erhältlichen Rohlingsautomaten bestehen im wesentlichen aus einem Grundgestell, einem Hydraulikaggregat, einem Hydraulikzylinder mit angebauten festen oder schwenkbaren Extrudierzylinder, einer festen oder schwenkbaren Düseneinheit, einer Schneideeinrichtung, einer Plastifizierschneckeneinheit (bei Kaltfütterung), einer an dem Rohlingsautomaten angebrachten Wegmesseinrichtung, die durch die Kolbenstange betätigt wird und einer Steuereinheit.

Das Füllen des Extrudierzylinders kann auf zwei Arten geschehen:
1. Die sogenannte Warmfütterung, bei der eine vorplastifizierte Mischung in Puppenform von der geöffneten Extrudierzylinderseite in den Extrudierzylinder eingeschoben wird.
2. Die sogenannte Kaltfütterung, bei der das kalte Rohmaterial über eine Plastifizierschnecke vorgewärmt
   a) vor dem Extrudierkolben oder
   b) hinter dem Extrudierkolben befördert wird.

Die Nachteile bei allen Varianten ist die aufwendige Reinigung der Einzelteile bei Mischungswechsel und/oder bei Arbeitsende.

Bei der Variante 1 und 2a ist zusätzlich die Stillstandszeit des Rohlingsautomaten zwischen den Extrudiervorgängen gross. Jedesmal muss abgewartet werden bis der Extrudierzylinder gefüllt ist.

Bei der Variante 2b ist die Gefahr der Unter- oder Überfütterung gross (Unterfütterung = während der Extrudierphase wird hinter dem Extrudierkolben zu wenig plastifizierte Masse für den nächsten Arbeitsgang bereitgestellt oder es kommt zu Zeitverlusten wenn der Extrudierkolben warten muss bis der Extrudierzylinder gefüllt ist, was beides eine unwirtschaftliche Gewichtsausbringung zur Folge hat. Überfütterung = es wird zuviel Masse von der Plastifiziereinheit hinter den Extrudierkolben gepresst, so dass ein zusätzlicher, nicht steuerbarer Einfluss auf den Extrudiervorgang ausgelöst wird, der die Gewichtsgenauigkeit der Rohlinge negativ beeinflusst). Ausserdem ist das durch die Plastifiziereinheit eingebrachte Mischungsvolumen um das Kolbenstangenvolumen kleiner als das benötigte Extrudiervolumen, was wiederum zu einer unwirtschaftlichen Gewichtsausbringung (produzierte Gewichtsmenge an Rohlingen) führt.

Die Erfindung löst die gestellten Aufgaben in folgender Art:

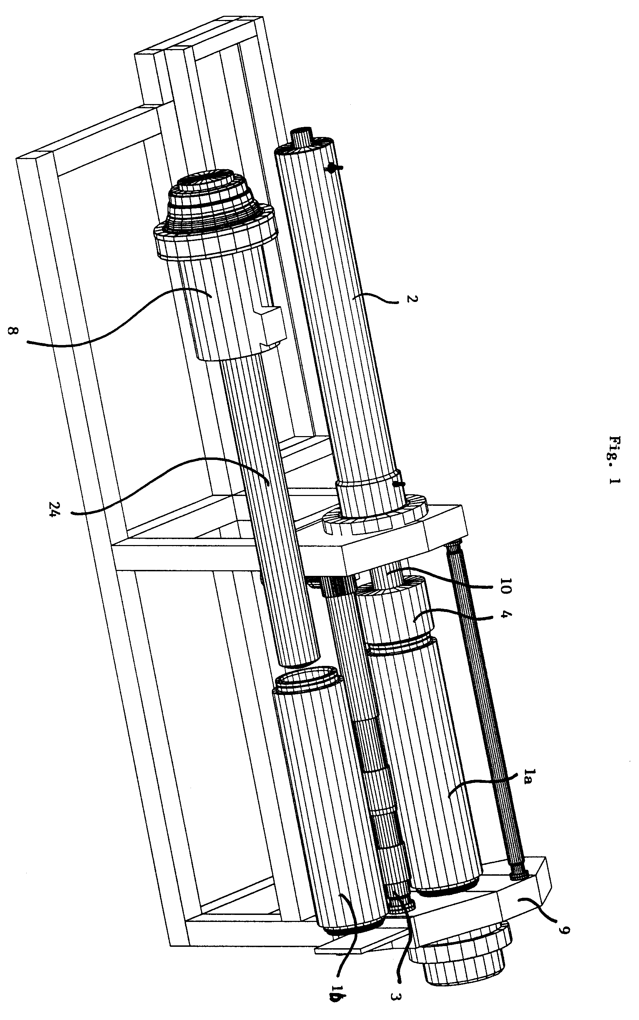

Um die Stillstandszeit deutlich zu verkürzen sind zwei oder mehrere Extrudierzylinder (Fig.1 (1a + 1b)) um eine Achse (3) angeordnet.

Während in einem der Extrudierzylinder (1a) der Extrudiervorgang ungehindert/ungestört, ohne Einfluss von aussen abläuft, wird der zweite Extrudierzylinder (1b) mit einer plastifizierten Masse gefüllt.

Dies kann in Warmfütterung oder in Kaltfütterung geschehen.

Die Warm- oder Kaltfütterung kann von vorne oder von hinten in den Extrudierzylinder erfolgen.

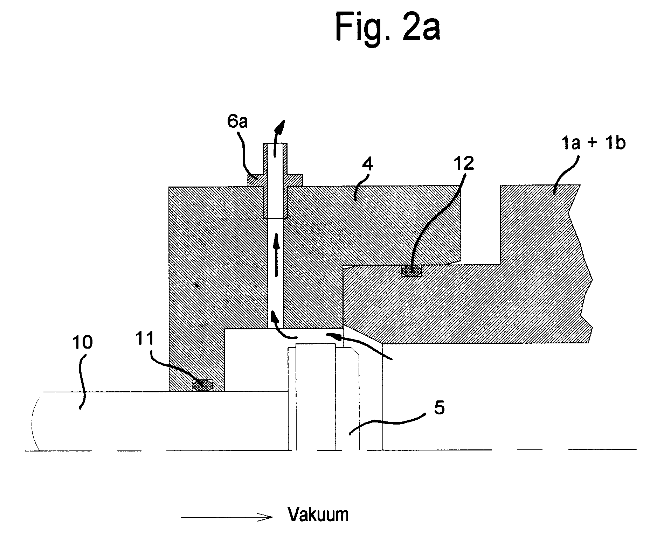

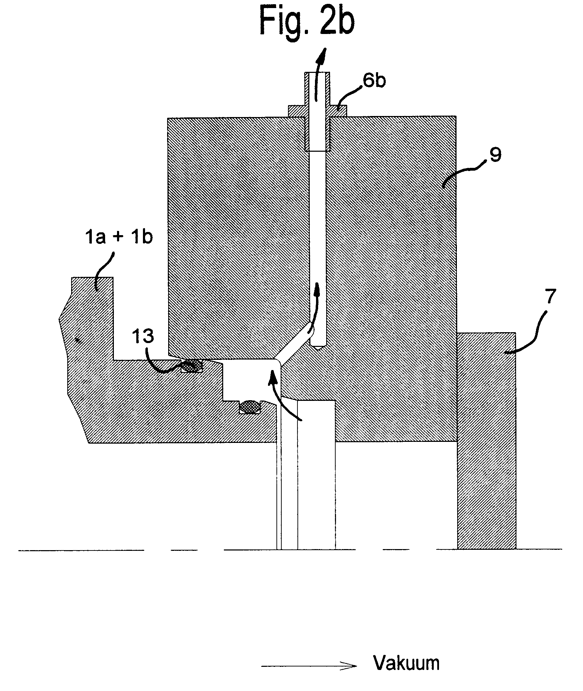

Nach Ablauf des Extrudiervorganges fährt der Verschlusskopf (4) bis zu seiner Endlage zurück, der Extrudierkolben (5) fährt bis zu seiner Endlage zurück, die Extrudierzylinder (1a + 1b) werden nach hinten bis zur Endlage gefahren und dann um die Achse (3) geschwenkt, so dass jetzt ein gefüllter Extrudierzylinder vor der hinteren Öffnung des Düsenträgers (9) steht. Der Verschlusskopf (4) wird vorgefahren, bis die Extrudierzylinder (1a + 1b) in Vakuumstellung (Fig.2a + 2b) steht. Über die Anschlüsse (6a + 6b) wird der in Arbeitsstellung stehende Extrudierzylinder z.B. (1b) über ein ventilloses System vakuumiert. Die Kolbenstange (10) wird gegen aussen mit dem O-Ring (11) abgedichtet. Den Übergang Verschlusskopf (4) Extrudierzylinder (1a oder 1b) dichtet der O-Ring (12) ab. Im vorderen Bereich wird der Extrudierzylinder (1a oder 1b) gegenüber dem Düsenträger (9) mit dem O-Ring (13) abgedichtet. Nach einer definierten Zeit oder einem definierten Unterdruck schiebt der Verschlusskopf (4) die Extrudierzylinder in die Extrudierstellung, der Kolben (5) fährt mit schneller Geschwindigkeit vorwärts bis der vorgegebene Extrudierdruck erreicht ist, dann wird auf die Extrudiergeschwindigkeit umgeschaltet. Der Extrudierkolben presst die Masse durch eine Düse (7). Eine vor der Düse (7) angeordnete Schneideeinrichtung trennt die austretende Masse in Halbfabrikate definierter Grösse. Während dieser Vorgang abläuft wird der zweite Extrudierzylinder (1a) gefüllt.

Bei der Kaltfütterung wird zu Beginn des Extrudiervorganges die Plastifiziereinheit (8) von vorne oder hinten in den leeren Extrudierzylinder gefahren, die Drehbewegung der Schnecke wird gestartet, die plastifizierte Mischung tritt an der Vorderseite des Schneckenrohres (24) aus. Durch ein in der hydraulischen Anlage befindliches Proportionalventil wird die Plastifiziereinheit definiert zurückgefahren, so dass die Mischung verdichtet wird. Dies geschieht so lange, bis die Füllendlage oder eine definierte Füllmenge erreicht ist. Die Drehbewegung der Schnecke wird gestoppt und die Plastifiziereinheit ganz aus den Extrudierzylinder gefahren.

Bei Bedarf können die Abläufe Extrudieren und Kaltfüttern so gesteuert werden, dass sie synchron ablaufen, d.h. die Füllgeschwindigkeit der Plastifiziereinheit kann über die Wegmesseinrichtung im Hydraulikzylinder gesteuert werden, so dass gewährleistet ist, dass der Füllvorgang zum gewünschten Zeitpunkt abgeschlossen ist.

Bei der Warmfütterung wird während des Extrudiervorganges der leere Extrudierzylinder mit der vorplastifizierten Mischung in Puppenform gefüllt.

Zum Reinigen werden die Extrudierzylinder horizontal gestellt, der ausgeschwenkte Extrudierzylinder (1a oder 1b) kann dann leicht gereinigt werden.

In der vertikalen Extrudierzylinderstellung kann der Extrudierkolben nach vorne gefahren werden und ist darin leicht zu reinigen.

Der Düsenbereich kann von hinten in dieser Extrudierzylinderstellung ebenfalls sehr leicht gereingt werden.

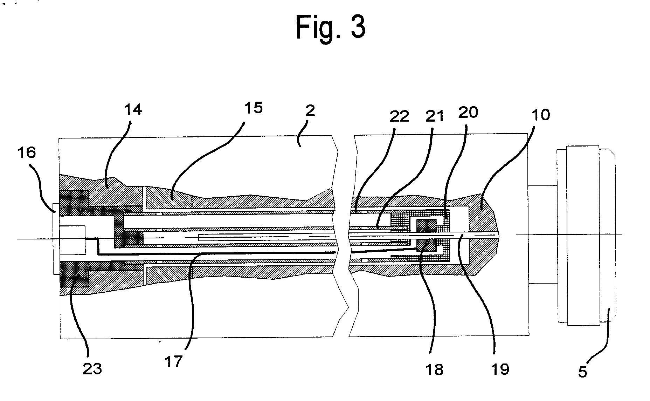

Als Wegmesssystem wurde ein hochauflösendes Messsystem, mit einer Auflösengenauigkeit von 1 µm, in den Hydraulikzylinder (2) integriert (Fig.3).

Ein Lesekopf (18) ist in einem Kopfträger (20) befestigt. Über ein Führungsrohr (21) und ein Schutzrohr (22) ist der Kopfträger (20) mit den Anschlussträger (23) verbunden. Der an den Zylinderboden (14) befestigte Anschlussträger (23) beinhaltet auch die Anschlussbuchse (16) über die der Lesekopf (18) mit der Auswerteelektronik verbunden ist. Die Lesekopfeinheit reicht weit in die holgebohrte Kolbenstange (10). Ein magnetisierter Stab (19) ist in der Kolbenstange (10) befestigt und wird bei dem fahren des Kolbens (15) durch den Lesekopf (18) bewegt. Die entstehenden Signale werden über die Anschlussleitung (17) zur Anschlussbuchse (16) übertragen.

## Patentansprüche

1. Rohlingsautomat zur Herstellung von Halbfabrikaten, dadurch gekennzeichnet, dass um eine Achse (3) zwei oder mehrere Extrudierzylinder (1a + 1b) angeordnet sind.

2. Rohlingsautomat nach Anspruch 1, dadurch gekennzeichnet, dass der jeweils ausgeschwenkte Extrudierzylinder durch eine Plastifiziereinheit gefüllt wird.

3. Rohlingsautomat nach Anspruch 2, dadurch gekennzeichnet, dass der Vorschub der Plastifiziereinheit über ein Proportionalventil so gesteuert werden kann, dass eine kompakte Füllung entsteht.

4. Rohlingsautomat nach Anspruch 2, dadurch gekennzeichnet, dass in dem Hydraulikzylinder ein Wegmesssystem integriert ist (Fig.3).

5. Rohlingsautomat nach Anspruch 2, dadurch gekennzeichnet, dass die Vakuumierung der Extrusionszylinder ohne Vakuumventile vorgenommen wird (Fig.2a + 2b).

6. Rohlingsautomat nach Anspruch 1, dadurch gekennzeichnet, dass der jeweils ausgeschwenkte Extrudierzylinder mit vorplastifizierter Mischung in Puppenform beschickt wird.

7. Rohlingsautomat nach Anspruch 1, dadurch gekennzeichnet, dass in dem Hydraulikzylinder ein Wegmesssystem integriert ist (Fig.3).

8. Rohlingsautomat nach Anspruch 1, dadurch gekennzeichnet, dass die Vakuumierung der Extrusionszylinder ohne Vakuumventile vorgenommem wird. (Fig.2a + 2b).
